(19) Europäisches Patentamt
European Patent Office
Office européen des brevets

(11) EP 4 509 564 A1

(12) EUROPEAN PATENT APPLICATION
published in accordance with Art. 153(4) EPC

(43) Date of publication:
**19.02.2025 Bulletin 2025/08**

(21) Application number: **23788319.4**

(22) Date of filing: **10.04.2023**

(51) International Patent Classification (IPC):
***C08L 69/00*** (2006.01) ***C08K 3/22*** (2006.01)
***C08K 5/42*** (2006.01) ***C08L 23/00*** (2006.01)
***C08L 23/26*** (2025.01)

(52) Cooperative Patent Classification (CPC):
**C08K 3/22; C08K 5/42; C08L 23/00; C08L 23/26; C08L 69/00**

(86) International application number:
**PCT/JP2023/014622**

(87) International publication number:
**WO 2023/199901 (19.10.2023 Gazette 2023/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **15.04.2022 JP 2022067849**
**15.04.2022 JP 2022067850**

(71) Applicant: **Mitsubishi Engineering-Plastics Corporation**
**Tokyo 105-0021 (JP)**

(72) Inventor: **KUSUMOTO Nobuhiko**
**Hiratsuka-shi, Kanagawa 254-0016 (JP)**

(74) Representative: **Zimmermann & Partner Patentanwälte mbB**
**Postfach 330 920**
**80069 München (DE)**

# (54) RESIN COMPOSITION, PELLET, AND MOLDED ARTICLE

(57) The present invention provides a resin composition comprising 5.0 to 20.0 parts by mass of particle (B) mainly composed of titanium oxide relative to 100 parts by mass of polycarbonate resin (A), polyolefin wax (C) and aromatic metal sulfonate (D); wherein
in the case where the polyolefin wax (C) is polyolefin wax (C-1) having an acid value of less than 0.5 mgKOH/g, the polyolefin wax (C-1) content is 0.001 to 1.5 parts by mass, and the aromatic metal sulfonate (D) content is 0.01 to 1.5 parts by mass; and
in the case where the polyolefin wax (C) is polyolefin wax (C-2) having an acid value of 0.5 to 150 mgKOH/g, the polyolefin wax (C-2) content is 0.001 to 1.5 parts by mass, and the aromatic alkali metal sulfonate (D) content is 0.2 to 1.5 parts by mass, a pellet and a molded product.

## Description

Technical Field

The present invention relates to a resin composition, a pellet and a molded product.

Background Art

Conventionally, titanium oxide has been blended into a polycarbonate resin for imparting shielding properties to a resin molded product or for coloring (Patent Literature 1 and Patent Literature 2).

Citation List

Patent Literature

Patent Literature 1: International Patent Publication No. WO 2019/172243
Patent Literature 2: Japanese Patent Laid-Open No. 2019-123809

Summary of the Invention

Technical Problem

As described above, in order to enhance the light-shielding properties of a molded product molded from resin composition containing a polycarbonate resin, a large amount of titanium oxide particles are blended into the resin composition in some cases. However, in the case where a resin composition contains a large amount of titanium oxide, the impact strength of a molded product obtained from the resin composition tends to be poor. In particular, in the case where a resin composition is detained in a cylinder during molding, the impact strength of the molded product tends to be poor.

The present invention aims to solve the problem. An object of the present invention is to provide a resin composition from which a molded product that achieves desired light-shielding properties and has excellent impact resistance, particularly excellent retention rate of impact resistance when detained, and the molded product.

Solution to Problem

The present inventors conducted research to address the above-mentioned problems, and as a result, discovered that the above problems could be solved by blending aromatic metal sulfonate into the polycarbonate resin and titanium oxide particles.

Specifically, the problems described above are solved by the following means.

<1> A resin composition comprising 5.0 to 20.0 parts by mass of particle (B) mainly composed of titanium oxide relative to 100 parts by mass of polycarbonate resin (A), polyolefin wax (C) and aromatic metal sulfonate (D); wherein

in the case where the polyolefin wax (C) is polyolefin wax (C-1) having an acid value of less than 0.5 mgKOH/g, the polyolefin wax (C-1) content is 0.001 to 1.5 parts by mass, and the aromatic metal sulfonate (D) content is 0.01 to 1.5 parts by mass; and
in the case where the polyolefin wax (C) is polyolefin wax (C-2) having an acid value of 0.5 to 150 mgKOH/g, the polyolefin wax (C-2) content is 0.001 to 1.5 parts by mass, and the aromatic alkali metal sulfonate (D) content is 0.2 to 1.5 parts by mass.

<2> The resin composition according to <1>, comprising 5.0 to 20.0 parts by mass of particle (B) mainly composed of titanium oxide, 0.001 to 1.5 parts by mass of polyolefin wax (C-1) having an acid value of less than 0.5 mgKOH/g, and 0.01 to 1.5 parts by mass of aromatic alkali metal sulfonate (D), relative to 100 parts by mass of polycarbonate resin (A).
<3> The resin composition according to <2>, having a mass ratio of polyolefin wax (C-1) to aromatic alkali metal sulfonate (D), i.e. (C-1)/(D), of 0.15 to 20.
<4> The resin composition according to <1>, comprising 5.0 to 20.0 parts by mass of particle (B) mainly composed of titanium oxide, 0.001 to 1.5 parts by mass of polyolefin wax (C-2) having an acid value of 0.5 to 150 mgKOH/g, and 0.2

to 1.5 parts by mass of aromatic alkali metal sulfonate (D), relative to 100 parts by mass of polycarbonate resin (A).

<5> The resin composition according to <4>, having a mass ratio of polyolefin wax (C-2) to aromatic alkali metal sulfonate (D), i.e. (C-2)/(D), of 0.15 to 10.0.

<6> The resin composition according to <4> or <5>, wherein in observation of a molded product formed from the resin composition at a cylinder setting temperature of 280°C and a cycle time of 1 minute with a scanning electron microscope, the equivalent circle diameter calculated from the area of the region of scattered particle (B) mainly composed of titanium oxide using formula (1) is 0.165 μm or less.

<7> The resin composition according to any one of <1> to <6>, wherein polyolefin wax (C) has a carboxyl group and/or an acid anhydride group thereof.

<8> The resin composition according to any one of <1> to <7>, wherein aromatic alkali metal sulfonate (D) has a fluorination ratio of less than 1%.

<9> The resin composition according to any one of <1> to <8>, comprising at least one filler selected from fibrous glass filler, fibrous carbon filler, and plate-shaped glass filler, with a content of less than 1 part by mass relative to 100 parts by mass of the polycarbonate resin.

<10> A pellet comprising the resin composition according to any one of <1> to <9>.

<11> A molded product formed from the resin composition according to any one of <1> to <9>.

<12> A molded product formed from the pellet according to <10>.

<2-1> A resin composition containing 5.0 to 20.0 parts by mass of particle (B) mainly composed of titanium oxide, 0.001 to 1.5 parts by mass of polyolefin wax (C-1) having an acid value of less than 0.5 mgKOH/g, and 0.01 to 1.5 parts by mass of aromatic alkali metal sulfonate (D), relative to 100 parts by mass of polycarbonate resin (A).

<2-2> The resin composition according to item <2-1>, wherein a test piece with a thickness of 3 mm molded from the resin composition at a cylinder setting temperature of 310°C and a detention time in a cylinder of 7 minutes has a retention rate of the Charpy notched impact strength of 72% or more measured based on ISO179-1 in comparison with the Charpy notched impact strength of one molded at a cylinder setting temperature of 280°C and a cycle time of 1 minute measured by the same method.

<2-3> The resin composition according to item <2-1> or <2-2>, wherein particles (B) mainly composed of titanium oxide contain 90.0 to 98.0 mass% of $TiO_2$, 0.5 to 3.5 mass% of $Al_2O_3$, and 0 to 6.0 mass% of $SiO_2$.

<2-4> The resin composition according to any one of items <2-1> to <2-3>, wherein aromatic alkali metal sulfonate (D) is an aromatic alkali metal sulfonate with a fluorination ratio of less than 1%.

<2-5> The resin composition according to any one of items <2-1> to <2-4>, wherein a test piece with a thickness of 3 mm molded from the resin composition at a cylinder setting temperature of 310°C and a detention time in a cylinder of 7 minutes has a retention rate of 72% or more of the Charpy notched impact strength measured based on ISO179-1 in comparison with the Charpy notched impact strength of one molded at a cylinder setting temperature of 280°C and a cycle time of 1 minute measured by the same method,

particles (B) mainly composed of titanium oxide contain 90.0 to 98.0 mass% of TiOz, 0.5 to 3.5 mass% of $Al_2O_3$, and 0 to 6.0 mass% of $SiO_2$, and

aromatic alkali metal sulfonate (D) is an aromatic alkali metal sulfonate with a fluorination ratio of less than 1%.

<2-6> A molded product formed from the resin composition according to any one of items <2-1> to <2-5>.

<2-7> A pellet made of the resin composition according to any one of items <2-1> to <2-5>.

<2-8> A molded product formed from the pellet according to item <2-7>.

<3-1> A resin composition containing 5.0 to 20.0 parts by mass of particle (B) mainly composed of titanium oxide, 0.001 to 1.5 parts by mass of polyolefin wax (C-2) having an acid value of 0.5 to 150 mgKOH/g, and 0.2 to 1.5 parts by mass of aromatic alkali metal sulfonate (D), relative to 100 parts by mass of polycarbonate resin (A).

<3-2> The resin composition according to item <3-1>, wherein polyolefin wax (C-2) has a carboxyl group and/or an acid anhydride group thereof.

<3-3> The resin composition according to item <3-1> or <3-2>, wherein a test piece with a thickness of 3 mm molded from the resin composition at a cylinder setting temperature of 310°C and a detention time in a cylinder of 7 minutes has a retention rate of 80% or more of the Charpy notched impact strength measured based on ISO179-1 in comparison with the Charpy notched impact strength of one molded at a cylinder setting temperature of 280°C and a cycle time of 1 minute measured by the same method.

<3-4> The resin composition according to item <3-1> or <3-2>, wherein in observation of a molded product formed from the resin composition at a cylinder setting temperature of 280°C and a cycle time of 1 minute with a scanning electron microscope, the equivalent circle diameter calculated from the area of the region of scattered particle (B) mainly composed of titanium oxide using formula (1) is 0.165 μm or less:

$$\text{Equivalent circle diameter} = 2\sqrt{\frac{\text{Area}}{\pi}} \qquad (1)$$

<3-5> The resin composition according to item <3-1> or <3-2>, wherein a test piece with a thickness of 3 mm molded from the resin composition at a cylinder setting temperature of 310°C and a detention time in a cylinder of 7 minutes has a retention rate of 80% or more of the Charpy notched impact strength measured based on ISO179-1 in comparison with the Charpy notched impact strength of one molded at a cylinder setting temperature of 280°C and a cycle time of 1 minute measured by the same method, and

in observation of a molded product formed from the resin composition at a cylinder setting temperature of 280°C and a cycle time of 1 minute with a scanning electron microscope, the equivalent circle diameter calculated from the area of the region of scattered particle (B) mainly composed of titanium oxide using formula (1) is 0.165 μm or less:

$$\text{Equivalent circle diameter} = 2\sqrt{\frac{\text{Area}}{\pi}} \qquad (1)$$

<3-6> The resin composition according to any one of items <3-1> to <3-5>, wherein particle (B) mainly composed of titanium oxide contains 90.0 to 98.0 mass% of $TiO_2$, 0.5 to 3.5 mass% of $Al_2O_3$, and 0 to 6.0 mass% of $SiO_2$.

<3-7> The resin composition according to any one of items <3-1> to <3-6>, having a mass ratio between polyolefin wax (C-2) and aromatic alkali metal sulfonate (D), i.e. (C-2)/(D), of 0.15 to 10.0.

<3-8> The resin composition according to any one of items <3-1> to <3-7>, including less than 1 part by mass of at least one filler selected from fibrous glass filler, fibrous carbon filler, and plate-shaped glass filler, relative to 100 parts by mass of the polycarbonate resin.

<3-9> The resin composition according to any one of items <3-1> to <3-8>, wherein polyolefin wax (C-2) has a carboxyl group and/or an acid anhydride group thereof,

a test piece with a thickness of 3 mm molded from the resin composition at a cylinder setting temperature of 310°C and a detention time in a cylinder of 7 minutes has a retention rate of 80% or more of the Charpy notched impact strength measured based on ISO179-1 in comparison with the Charpy notched impact strength of one molded at a cylinder setting temperature of 280°C and a cycle time of 1 minute measured by the same method,

in observation of a molded product formed from the resin composition at a cylinder setting temperature of 280°C and a cycle time of 1 minute with a scanning electron microscope, the equivalent circle diameter calculated from the area of the region of scattered particle (B) mainly composed of titanium oxide using formula (1) is 0.165 μm or less, and

particle (B) mainly composed of titanium oxide contains 90.0 to 98.0 mass% of $TiO_2$, 0.5 to 3.5 mass% of $Al_2O_3$, and 0 to 6.0 mass% of $SiO_2$,

the resin composition having a mass ratio between polyolefin wax (C-2) and aromatic alkali metal sulfonate (D), i.e. (C-2)/(D), of 0.15 to 10.0, and

including less than 1 part by mass of at least one filler selected from fibrous glass filler, fibrous carbon filler, and plate-shaped glass filler, relative to 100 parts by mass of the polycarbonate resin:

$$\text{Equivalent circle diameter} = 2\sqrt{\frac{\text{Area}}{\pi}} \qquad (1)$$

<3-10> A molded product formed from the resin composition according to any one of items <3-1> to <3-9>.

<3-11> A pellet made of the resin composition according to any one of items <3-1> to <3-9>.

<3-12> A molded product formed from the pellet according to item <3-11>.

Advantageous Effect of Invention

According to the present invention, a resin composition from which a molded product that achieves desired light-shielding properties, and has excellent impact resistance, particularly excellent retention rate of impact resistance when detained, and the molded product can be provided.

Description of Embodiment

A mode for carrying out the present invention (hereinafter simply referred to as "present embodiment") is described in detail as follows. Note that the present embodiment below is an illustration for explaining the present invention, and the present invention is not limited to the present embodiment only.

In addition, in the present specification, "to" is used to include numerical values prefixed and postfixed thereto as a lower limit value and an upper limit value.

In the present specification, various physical property values and characteristic values are assumed to be at 23°C unless otherwise stated.

In the case where the measurement methods, etc. explained in standards shown in the present specification differ from year to year, the methods are based on the standards as of January 1, 2022, unless otherwise stated.

The resin composition of the present embodiment includes 5.0 to 20.0 parts by mass of particle (B) mainly composed of titanium oxide (hereinafter referred to as "titanium oxide particle") relative to 100 parts by mass of polycarbonate resin (A), polyolefin wax (C) and aromatic metal sulfonate (D); wherein

in the case where polyolefin wax (C) is polyolefin wax (C-1) having an acid value of less than 0.5 mgKOH/g, the polyolefin wax (C-1) content is 0.001 to 1.5 parts by mass, and the aromatic metal sulfonate (D) content is 0.01 to 1.5 parts by mass; and

in the case where polyolefin wax (C) is polyolefin wax (C-2) having an acid value of 0.5 to 150 mgKOH/g, the polyolefin wax (C-2) content is 0.001 to 1.5 parts by mass, and the aromatic alkali metal sulfonate (D) content is 0.2 to 1.5 parts by mass. Such a constitution allows to provide a resin composition from which a molded product excellent in the retention rate of impact resistance when detained can be obtained.

A resin composition in a first embodiment contains 5.0 to 20.0 parts by mass of particle (B) mainly composed of titanium oxide, 0.001 to 1.5 parts by mass of polyolefin wax (C-1) having an acid value of less than 0.5 mgKOH/g, and 0.01 to 1.5 parts by mass of aromatic alkali metal sulfonate (D), relative to 100 parts by mass of polycarbonate resin (A). Such a constitution allows to provide a molded product which achieves desired light shielding properties, with excellent impact resistance, particularly excellent retention rate of impact resistance when detained.

In other words, in a first embodiment, titanium oxide particles (B) are blended to achieve shielding properties. Further, in the first embodiment, polyolefin wax is blended to achieve impact resistance. However, it has been found that in the case of using an acid-modified polyolefin wax as polyolefin wax, hydroxyl groups on the surface of titanium oxide particles (B) are attracted, so that titanium oxide particles (B) tend to aggregate easily. In the first embodiment, it is presumed that use of a polyolefin wax with a low acid value (acid-unmodified or slightly acid-modified polyolefin wax (C-1)) effectively suppresses lowering of dispersibility of titanium oxide particles (B). Further, in the first embodiment, it is presumed that use of aromatic alkali metal sulfonate (D) improves the dispersibility of titanium oxide particles (B).

In particular, with the constitution of the first embodiment, provided is a resin composition from which a molded product with excellent retention rate of impact resistance when detained can be obtained.

[Details of resin composition in second embodiment]

<Polycarbonate resin (A)>

The resin composition in the first embodiment includes polycarbonate resin (A).

Specifically, polycarbonate resin (A) is not particularly limited as long as it contains a -[O-R-OC(=O)]- unit (R includes an organic group, preferably a hydrocarbon group, more preferably, an aliphatic group, an aromatic group, or a group containing both an aliphatic group and an aromatic group, having a linear or branched structure) containing a carbonate ester bond in the molecular main chain. In the first embodiment, polycarbonate resin (A) is preferably an aromatic polycarbonate resin, more preferably a polycarbonate resin having a bisphenol skeleton. With use of such a polycarbonate resin, better heat resistance and toughness can be achieved. In the first embodiment, the polycarbonate resin having a bisphenol skeleton includes preferably 90 mol% or more of structural units having a bisphenol skeleton in all the structural units, more preferably 90 mol% or more of structural units derived from bisphenol A in all the structural units.

Further, the viscosity average molecular weight (Mv) of polycarbonate resin (A) is preferably 10000 or more, more preferably 12000 or more, and still more preferably 15000 or more. With a viscosity average molecular weight (Mv) controlled to the lower limit or more, the durability of a resulting molded product tends to be further improved. The upper limit of the viscosity average molecular weight (Mv) of polycarbonate resin (A) is preferably 50000 or less, more preferably

40000 or less, and still more preferably 30000 or less. With a viscosity average molecular weight (Mv) controlled to the upper limit or less, the molding processability of a molded product tends to be further improved.

The viscosity average molecular weight (Mv) is a value determined as follows. Intrinsic viscosity [η] (unit: dL/g) at a temperature of 25°C is determined with an Ubbelohde viscometer using methylene chloride as solvent. Then, the value was determined from Schnell's viscosity formula, that is, $\eta=1.23\times10^{-4}\times Mv^{0.83}$.

In the case of using two or more types of polycarbonate resins, the viscosity average molecular weight of the mixture is employed.

The method for producing polycarbonate resin (A) is not particularly limited, and those produced by a conventionally known phosgene method (interfacial polymerization method) or melting method (ester exchange method) may be used. Furthermore, in the case of using the melting method, a polycarbonate resin with a controlled amount of OH groups of terminal groups may be used.

Polycarbonate resin (A) for use in the first embodiment may be recycled polycarbonate resin products (including recovered products, material recycled products, chemically recycled products, etc.), rejected products, and offcuts from thermoplastic resin molding.

In addition to the above, for details of polycarbonate resin (A), paragraphs 0013 to 0041 of Japanese Patent Laid-Open No. 2021-084942 and paragraphs 0030 to 0035 of Japanese Patent Laid-Open No. 2021-119211 may be referred to, and the contents thereof are incorporated into the present specification.

The proportion of polycarbonate resin (A) in the resin composition in the first embodiment is preferably 83 mass% or more, more preferably 85 mass% or more, and still more preferably 87 mass% or more. With a proportion controlled to the lower limit or more, the impact resistance properties of a resulting molded product tend to be more improved. Also, the proportion of polycarbonate resin (A) in the resin composition of the first embodiment is preferably 95 mass% or less, more preferably 93 mass% or less. With a proportion controlled to the upper limit or less, the light-shielding properties of a resulting molded product tend to be more improved.

The resin composition in the first embodiment may contain only one type of polycarbonate resin (A), or may contain two or more types. In the case where two or more types are contained, it is preferable that the total amount be within the range.

<Particles (B) mainly composed of titanium oxide>

The resin composition in the first embodiment includes particles mainly composed of titanium oxide (titanium oxide particles) (B). Containing titanium oxide particles (B) allows a resulting molded product to achieve light-shielding properties.

Containing titanium oxide as main component means that titanium oxide has a largest content among the components contained in the titanium oxide particles (B), and the proportion of titanium oxide (preferably titanium dioxide) in titanium oxide particles (B) is preferably 85.0 mass% or more, preferably 90.0 mass% or more.

It is preferable that titanium oxide particles (B) contain 90.0 to 98.0 mass% of $TiO_2$, 0.5 to 3.5 mass% of $Al_2O_3$, and 0 to 6.0 mass% of $SiO_2$. Further, in addition to the components described above, titanium oxide particles (B) may contain 0 to 0.1 mass% of $SO_3$, 0 to 0.15 mass% of $Na_2O$, and 0 to 0.01 mass% of Cl. Furthermore, titanium oxide particles (B) may contain other components, and the total thereof is 100 mass%.

In the first embodiment, titanium oxide particles (B) may be rutile-type titanium oxide particles or anatase-type titanium oxide particles. Further, the surface of titanium oxide particles (B) is preferably treated with a surface treatment agent. That is, it is preferable that the surface of titanium oxide particles (B) has a layer formed from a surface treatment agent (particularly an organic layer). With such a constitution, titanium oxide is more easily dispersed in polycarbonate resin (A), so that a molded product with more excellent appearance can be obtained. Examples of the surface treatment agent include polymers, preferably siloxane compounds and particularly preferably hydrogen methylsiloxane and dimethylsiloxane. The surface treatment agent may be physically adsorbed or chemically bonded to the titanium oxide surface.

Titanium oxide is usually titanium dioxide.

In the first embodiment, the resin composition contains 5.0 to 20.0 parts by mass of titanium oxide particles (B) relative to 100 parts by mass of polycarbonate resin (A). With a content controlled to the lower limit or more, the shielding properties tend to be improved. Further, with a content controlled to the upper limit or less, higher impact resistance tends to be obtained even through molding with a detention period.

In the first embodiment, the content of titanium oxide particles (B) is preferably 6.0 parts by mass or more, more preferably 8.0 parts by mass or more, and still more preferably 9.0 parts by mass or more, relative to 100 parts by mass of polycarbonate resin (A). In the first embodiment, the content of titanium oxide particles (B) is preferably 18.0 parts by mass or less, more preferably 16.0 parts by mass or less, still more preferably 14.0 parts by mass or less, and furthermore preferably 12.0 parts by mass or less, relative to 100 parts by mass of polycarbonate resin (A).

The resin composition in the first embodiment may contain only one type of titanium oxide particle (B), or may

contain two or more types. In the case where two or more types are contained, it is preferable that the total amount be within the range described above.

<Polyolefin wax (C-1) with acid value of less than 0.5 mgKOH/g>

The resin composition in the first embodiment includes polyolefin wax (C-1) having an acid value of less than 0.5 mgKOH/g (acid-unmodified or slightly acid-modified polyolefin wax (C-1)). Containing acid-unmodified or slightly acid-modified polyolefin wax (C-1) allows to improve impact resistance while suppressing aggregation of titanium oxide particles (B).

The acid value of acid-unmodified or slightly acid-modified polyolefin wax (C-1) is preferably 0.4 mgKOH/g or less, more preferably 0.3 mgKOH/g or less, still more preferably 0.2 mgKOH/g or less, further preferably 0.1 mgKOH/g or less, furthermore preferably 0.01 mgKOH/g or less, and particularly more preferably 0 mgKOH/g or a detection limit or less.

The acid value of acid-unmodified or slightly acid-modified polyolefin wax (C-1) is measured according to the description in the following Examples.

The viscosity average molecular weight of acid-unmodified or slightly acid-modified polyolefin wax (C-1) for use in the first embodiment is preferably 1000 or more, more preferably 2000 or more, still more preferably 3000 or more, and preferably 6000 or less, more preferably 5000 or less. With a viscosity average molecular weight controlled to the lower limit or more, the impact properties of a resulting molded product tend to be improved. Also with a viscosity average molecular weight controlled to the upper limit or less, the dispersibility of titanium oxide in a resulting molded product tends to be more improved.

In the case where acid-unmodified or slightly acid-modified polyolefin wax (C-1) has an acid group, a carboxyl group and/or an acid anhydride thereof is preferred, a maleic acid group and/or a maleic anhydride group is more preferred, and a maleic anhydride group is still more preferred.

Examples of acid-unmodified or slightly acid-modified polyolefin wax (C-1) include waxes such as polyethylene, polypropylene, polybutylene, $\alpha$-olefin polymers, ethylene-propylene copolymers, and ethylene-butene copolymers. A polyethylene wax is preferred, and a low density polyethylene wax is more preferred.

The density of acid-unmodified or slightly acid-modified polyolefin wax (C-1) is preferably 700 $kg/m^3$ or more, more preferably 800 $kg/m^3$ or more, still more preferably 900 $kg/m^3$ or more, and preferably 1100 $kg/m^3$ or less, more preferably 1000 $kg/m^3$ or less.

Acid-unmodified or slightly acid-modified polyolefin wax (C-1) has a melting point of preferably 60 to 145°C.

As commercially available acid-unmodified or slightly acid-modified polyolefin waxes (C-1), for example, Mitsui Hi-WAX 100P, 200P, 400P, 800P, 110P, 210P, 220P, 320P, 410P, 420P and 720P manufactured by Mitsui Chemicals, Inc. may be used.

The content of acid-unmodified or slightly acid-modified polyolefin wax (C-1) in the resin composition in the first embodiment relative to 100 parts by mass of polycarbonate resin (A) is 0.001 parts by mass or more, preferably 0.005 parts by mass or more, more preferably 0.01 parts by mass or more, still more preferably 0.05 parts by mass or more, further preferably 0.1 parts by mass or more, and furthermore preferably 0.2 parts by mass or more. With a content controlled to the lower limit or more, the retention rate of impact resistance when detained during molding tends to be more improved. Also, the content of acid-unmodified or slightly acid-modified polyolefin wax (C-1) in the resin composition in the first embodiment relative to 100 parts by mass of polycarbonate resin (A) is 1.5 parts by mass or less, preferably 1.3 parts by mass or less, more preferably 1.1 parts by mass or less, still more preferably 0.9 parts by mass or less, further preferably 0.7 parts by mass or less, and furthermore preferably 0.6 parts by mass or less. With a content controlled to the upper limit or less, the dispersibility of titanium oxide tends to be improved.

The resin composition in the first embodiment may contain only one type of acid-unmodified or slightly acid-modified polyolefin wax (C-1), or may contain two or more types. In the case where two or more types are contained, it is preferable that the total amount be within the range described above.

The resin composition in the first embodiment may or may not contain a polyolefin wax having an acid value of 0.5 mgKOH/g or more (e.g. polyolefin wax (C-2) described below). In the first embodiment, it is preferable that a polyolefin wax having an acid value of 0.5 mgKOH/g or more be substantially not included. "Substantially not included" means that the content of polyolefin wax with an acid value of 0.5 mgKOH/g or more is 10 mass% or less of content of acid-unmodified or slightly acid-modified polyolefin wax (C-1). The content is preferably 5 mass% or less, more preferably 3 mass% or less, and still more preferably 1 mass% or less.

<Aromatic alkali metal sulfonate (D)>

The resin composition in the first embodiment contains 0.01 to 1.5 parts by mass of aromatic alkali metal sulfonate (D) relative to 100 parts by mass of polycarbonate resin (A). Containing aromatic alkali metal sulfonate (D) allows to suppress aggregation of titanium oxide particles (B) effectively, so that the impact resistance of a resulting molded

product, particularly retention rate of the impact resistance when detained, can be improved.

Aromatic alkali metal sulfonate (D) is a component generally used as a flame retardant for polycarbonate resins. In the first embodiment, titanium oxide particles (B) can be dispersed effectively by using aromatic alkali metal sulfonate (D).

Aromatic alkali metal sulfonate (D) is an alkali metal salt of sulfonic acid containing an aromatic ring, and more preferably an alkali metal salt of sulfonic acid containing one or two benzene rings. The alkali metal constituting the alkali metal salt is preferably lithium, sodium, potassium or rubidium, more preferably sodium or potassium, and still more preferably sodium. Further, aromatic alkali metal sulfonate (D) may contain a fluorine atom. The fluorine content is preferably less than 1%, more preferably 0.5% or less, and zero content of fluorine atom is still more preferred. Further, aromatic alkali metal sulfonate (D) may contain a halogen atom. The halogen content is preferably less than 1%, more preferably 0.5% or less, and zero content of halogen atom is still more preferred. Here, the fluorine content and the halogen content are each independently the value expressed as B/(A+B), wherein A is the number of hydrogen atoms bonded to carbon atoms of aromatic alkali metal sulfonate (D), and B is the number of fluorine atoms or halogen atoms.

Aromatic alkali metal sulfonate (D) is preferably a compound represented by formula (D1).

Formula (D1)

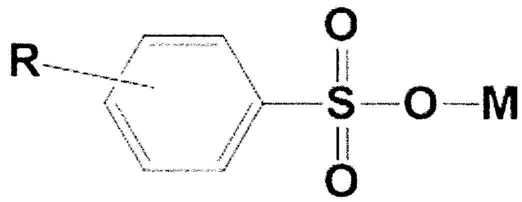

Wherein M is an alkali metal and R is a substituent.

M is preferably lithium, sodium, potassium, or rubidium, more preferably sodium or potassium, and still more preferably sodium.

R has a formula weight of preferably 70 to 300.

R is preferably a hydrocarbon group or $R^1$-S(=O)$_2$-, wherein $R^1$ is a hydrocarbon group.

The hydrocarbon group as R is preferably an alkyl group having 1 to 10 carbon atoms, more preferably a methyl group, an ethyl group, a propyl group, or a butyl group, and still more preferably a methyl group.

The hydrocarbon group as $R^1$ is preferably a substituted or unsubstituted phenyl group. The substituent on this occasion is preferably an alkyl group having 1 to 10 carbon atoms, more preferably a methyl group, ethyl group, propyl group, or butyl group, and still more preferably a methyl group.

In formula (D1), R is preferably an alkyl group having 1 to 10 carbon atoms, more preferably a methyl group, an ethyl group, a propyl group, or a butyl group, and still more preferably a methyl group.

The molecular weight of aromatic alkali metal sulfonate (D) for use in the first embodiment is preferably 100 to 900, more preferably 100 to 500.

Specific examples of aromatic alkali metal sulfonate (D) for use in the first embodiment are shown below. In the first embodiment, it is needless to say that aromatic alkali metal sulfonate (D) is not limited thereto.

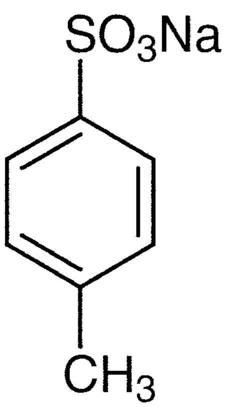

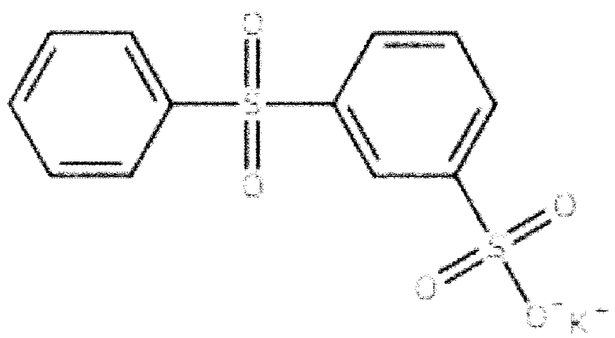

As aromatic alkali metal sulfonate (D), commercially available products such as product name CHEMGUARD-NATS manufactured by Sun Chemical Company Ltd. and KSS-FR manufactured by Arichem Ltd. may be used.

The content of aromatic alkali metal sulfonate (D) in the resin composition in the first embodiment is 0.01 parts by

mass or more, preferably more than 0.1 parts by mass, more preferably 0.15 parts by mass or more, still more preferably 0.2 parts by mass or more, further preferably 0.24 parts by mass or more, and furthermore preferably 0.26 parts by mass or more, relative to 100 parts by mass of polycarbonate resin (A). With a content controlled to the lower limit or more, the impact resistance, particularly the retention rate of the impact resistance when detained, tends to be more improved. Further, the upper limit of the content of aromatic alkali metal sulfonate (D) is 1.5 parts by mass or less, preferably 1.3 parts by mass or less, more preferably 1.2 parts by mass or less, still more preferably 1.0 parts by mass or less, further preferably 0.8 parts by mass or less, furthermore preferably 0.7 parts by mass or less, and even furthermore preferably 0.6 parts by mass or less, relative to 100 parts by mass of polycarbonate resin (A). With a content controlled to the lower limit or more, the impact resistance, particularly the retention rate of the impact resistance when detained, tends to be more improved.

The resin composition of the first embodiment may contain only one type of aromatic alkali metal sulfonate (D), or may contain two or more types. In the case where two or more types are contained, it is preferable that the total amount be within the range.

The resin composition in the first embodiment may or may not contain an alkali metal salt other than aromatic alkali metal sulfonate (D). The alkali metal salt other than aromatic alkali metal sulfonate (D) may be referred to paragraphs 0069 to 0078 of Japanese Patent Laid-Open No. 2015-117298, and the content thereof is incorporated into the present specification.

It is preferable that the resin composition in the first embodiment contain substantially no alkali metal salt other than aromatic alkali metal sulfonate (D). "Containing substantially no" means that the content of alkali metal salts other than aromatic alkali metal sulfonate (D) is 10 mass% or less of the content of aromatic alkali metal sulfonate (D) contained in the resin composition. The content is preferably 5 mass% or less, more preferably 3 mass% or less, and still more preferably 1 mass% or less.

The resin composition in the first embodiment has a mass ratio of Acid-unmodified or slightly acid-modified polyolefin wax (C-1)/Aromatic alkali metal sulfonate (D), of preferably 0.15 or more, more preferably 0.3 or more, still more preferably 0.5 or more, further preferably 0.7 or more, and furthermore preferably 1.0 or more. With the mass ratio controlled to the lower limit or more, the dispersibility of titanium oxide tends to be more improved. Further, a mass ratio of Acid-unmodified or slightly acid-modified polyolefin wax (C-1)/Aromatic alkali metal sulfonate (D) is preferably 20 or less, more preferably 10 or less, still more preferably 5 or less, further preferably 3 or less, furthermore preferably 2 or less, and even furthermore preferably 1.5 or less. With the mass ratio controlled to the upper limit or less, the retention rate of the impact resistance when detained during molding tends to be more improved.

<Filler (E)>

The resin composition in the first embodiment may or may not contain a filler. The resin composition in the first embodiment has a content of at least one filler selected from a fibrous glass filler, a fibrous carbon filler, and a plate-shaped glass filler of preferably less than 1 part by mass relative to 100 parts by mass of polycarbonate resin (A). Further, the resin composition in the first embodiment has a content of filler of preferably less than 1 part by mass relative to 100 parts by mass of polycarbonate resin (A) .

The filler may be referred to paragraphs 0052 to 0066 of Japanese Patent Laid-Open No. 2006-249286, and the content thereof is incorporated in the present specification.

<Other ingredients>

The resin composition in the first embodiment may further contain components other than those described above. Examples of the other components include reinforcing materials (excluding filler (E)), mold release agents, colorants other than titanium oxide (e.g. carbon black), stabilizers (thermal stabilizers, antioxidants, etc.), flame retardants other than alkali metal salts, flame retardant aids, anti-dripping agents, ultraviolet absorbers, fluorescent whitening agents, impact modifiers, epoxy compounds, antifogging agents, fluidity modifiers, plasticizers, dispersants, antibacterial agents, and antiviral agents. The reinforcing materials include at least one filler selected from fibrous glass filler, fibrous carbon filler, and plate-shaped glass filler, in amount of preferably less than 1 part by mass relative to 100 parts by mass of polycarbonate resin. Details of the components may be referred to paragraphs 0107 to 0115 of Japanese Patent Laid-Open No. 2014-136710, paragraphs 0106 to 0128 of Japanese Patent Laid-Open No. 2015-117298, and paragraphs 0055 to 0061 of Japanese Patent Laid-Open No. 2018-095706, and the contents thereof are incorporated in the present specification.

In the case where the other components are contained, the content thereof is, for example, 0.001 mass% or more and 5.0 mass% or less, preferably 3.0 mass% or less, more preferably 1.0 mass% or less, based on the mass of the resin composition.

[Details of resin composition in second embodiment]

The resin composition in the second embodiment contains 5.0 to 20.0 parts by mass of particle (B) mainly composed of titanium oxide, 0.001 to 1.5 parts by mass of polyolefin wax (C-2) having an acid value of 0.5 to 150 mgKOH/g (hereinafter referred to as "acidic polyolefin wax (C-2)" in some cases), and 0.2 to 1.5 parts by mass of aromatic alkali metal sulfonate (D), relative to 100 parts by mass of polycarbonate resin (A). With the constitution, a molded product that achieves desired light-shielding properties, and has an excellent surface appearance and excellent impact resistance, particularly excellent retention rate of impact resistance when detained, can be provided.

That is, in the second embodiment, titanium oxide particles (B) are blended to achieve shielding properties. Further, in the second embodiment, an acid-modified polyolefin wax is blended to achieve impact resistance. However, in the case of using an acid-modified polyolefin wax as polyolefin wax, the acid-modified polyolefin wax attracts hydroxyl groups on the surface of titanium oxide particles, so that it is presumed that titanium oxide particles (B) and acid-unmodified or slightly acid-modified polyolefin wax (C-1) in the first embodiment tend to aggregate easily. In the second embodiment, it is presumed that the dispersibility of titanium oxide particles (B) improve with use of a large amount of aromatic alkali metal sulfonate (D).

In particular, with the constitution in the second embodiment, when the resin composition is detained during molding, a molded product excellent in the retention rate of impact resistance can be obtained.

<Polycarbonate resin (A)>

The resin composition in the second embodiment contains polycarbonate resin (A). The details of polycarbonate resin (A) in the resin composition in the second embodiment are the same as those of polycarbonate resin (A) in the resin composition in the first embodiment, and the preferred range is also the same.

<Particles (B) mainly composed of titanium oxide>

The resin composition in the second embodiment contains particles mainly composed of titanium oxide (titanium oxide particles) (B). Due to containing titanium oxide particles (B), a resulting molded product can achieve light-shielding properties. The details of titanium oxide particles (B) in the resin composition in the second embodiment are the same as those of titanium oxide particles (B) in the resin composition in the first embodiment, and the preferred range is also the same.

<Polyolefin wax (C-2) with acid value of 0.5 to 150 mgKOH/g>

The resin composition in the second embodiment contains polyolefin wax (C-2) having an acid value of 0.5 to 150 mgKOH/g (acid-modified polyolefin wax (C-2)). Due to containing acid-modified polyolefin wax (C-2), a molded product excellent in surface appearance and impact resistance can be obtained.

The acid value of acid-modified polyolefin wax (C-2) is preferably 0.8 mgKOH/g or more, more preferably 1.2 mgKOH/g or more, still more preferably 5 mgKOH/g or more, further preferably 10 mgKOH/g or more, furthermore preferably 20 mgKOH/g or more, even furthermore preferably 30 mgKOH/g or more, particularly preferably 40 mgKOH/g or more, further particularly preferably 50 mgKOH/g or more, and may be 70 mgKOH/g or more. The upper limit of the acid value of acid-modified polyolefin wax (C-2) is practically 150 mgKOH/g or less, and may be 110 mgKOH/g or less.

The acid value of acid-modified polyolefin wax (C-2) is measured according to the description in the following Examples.

The viscosity average molecular weight of acid-modified polyolefin wax (C-2) for use in the second embodiment is preferably 1000 or more and preferably 20000 or less, more preferably 15000 or less. With a viscosity average molecular weight controlled to the lower limit or more, the impact properties of a resulting molded product tend to be improved. Further, with a viscosity average molecular weight controlled to the upper limit or less, the dispersibility of titanium oxide in a resulting molded product tends to be improved.

Acid-modified polyolefin wax (C-2) has preferably a carboxyl group and/or an acid anhydride group thereof, more preferably a maleic acid group and/or a maleic anhydride group, and still more preferably a maleic anhydride group.

Examples of acid-modified polyolefin wax (C-2) include waxes such as polyethylene, polypropylene, polybutylene, $\alpha$-olefin polymers, ethylene-propylene copolymers, and ethylene-butene copolymers. A polyethylene wax is preferred, and a low-density polyethylene wax is more preferred.

The density of acid-modified polyolefin wax (C-2) is preferably 700 $kg/m^3$ or more, more preferably 800 $kg/m^3$ or more, still more preferably 900 $kg/m^3$ or more, and preferably 1100 $kg/m^3$ or less, more preferably 1000 $kg/m^3$ or less.

It is preferable that acid-modified polyolefin wax (C-2) have a melting point of 60 to 145°C.

As commercially available acid-modified polyolefin waxes (C-2), for example, Mitsui Hi-WAX 210MP, 220MP,

310MP, 320MP, 405MP, 405MPF, 4051E, 4052E, 4202E, 4252E, 1105A and 2203A, manufactured by Mitsui Chemicals, Inc., and DIACARNA 30M manufactured by Mitsubishi Chemical Corporation may be used.

The content of acid-modified polyolefin wax (C-2) in the resin composition in the second embodiment is 0.001 parts by mass or more, preferably 0.005 parts by mass or more, more preferably 0.01 parts by mass or more, still more preferably 0.06 parts by mass or more, further preferably 0.1 parts by mass or more, and furthermore preferably 0.2 parts by mass or more, relative to 100 parts by mass of polycarbonate resin (A). With a content controlled to the lower limit or more, the retention rate of impact resistance when detained during molding tends to be more improved. Further, the content of acid-modified polyolefin wax (C-2) in the resin composition in the second embodiment is 1.5 parts by mass or less, preferably 1.3 parts by mass or less, more preferably 1.1 parts by mass or less, still more preferably 0.9 parts by mass or less, further preferably 0.7 parts by mass or less, and furthermore preferably 0.5 parts by mass or less. With a content controlled to the upper limit or less, the dispersibility of titanium oxide tends to be more improved.

The resin composition in the second embodiment may contain only one type of acid-modified polyolefin wax (C-2), or may contain two or more types. In the case where two or more types are contained, it is preferable that the total amount is within the range.

The resin composition in the second embodiment may or may not contain polyolefin wax (C-1) having an acid value of less than 0.5 mgKOH/g. In the second embodiment, it is preferable that substantially no polyolefin wax having an acid value of less than 0.5 mgKOH/g be contained. "Containing substantially no" means that the content of a polyolefin wax with an acid value of less than 0.5 mgKOH/g is 10 mass% or less relative to the content of acid-modified polyolefin wax (C-2), and the content is preferably 5 mass% or less, more preferably 3 mass% or less, still more preferably 1 mass% or less.

<Aromatic alkali metal sulfonate (D)>

The resin composition of the second embodiment contains 0.2 to 1.5 parts by mass of aromatic alkali metal sulfonate (D) relative to 100 parts by mass of polycarbonate resin (A). Due to containing aromatic alkali metal sulfonate (D), the aggregation of titanium oxide particles (B) is effectively suppressed, so that the impact resistance of a resulting molded product, particularly the retention rate of impact resistance when detained, can be improved.

Aromatic alkali metal sulfonate (D) is a component generally used as a flame retardant for polycarbonate resins. In the second embodiment, aromatic alkali metal sulfonate (D) in an amount more than the amount normally blended as a flame retardant is used, so that titanium oxide particles (B) can be effectively dispersed.

The details of aromatic alkali metal sulfonate (D) are the same as the preferred ranges of aromatic alkali metal sulfonate (D) in the first embodiment, except for the content.

The content of aromatic alkali metal sulfonate (D) in the resin composition in the second embodiment is 0.2 parts by mass or more, preferably 0.24 parts by mass or more, and more preferably 0.26 parts by mass or more, relative to 100 parts by mass of polycarbonate resin (A). With a content controlled to the lower limit or more, the impact resistance, particularly the retention rate of the impact resistance when detained, tends to be more improved. Further, the upper limit of the content of aromatic alkali metal sulfonate (D) relative to 100 parts by mass of polycarbonate resin (A) is 1.5 parts by mass or less, preferably 1.3 parts by mass or less, more preferably 1.2 parts by mass or less, still more preferably 1.0 parts by mass or less, further preferably 0.8 parts by mass or less, furthermore preferably 0.7 parts by mass or less, and even furthermore preferably 0.6 parts by mass or less. With a content controlled to the lower limit or more, the impact resistance, particularly the retention rate of the impact resistance when detained, tends to be more improved.

The resin composition in the second embodiment may contain only one type of aromatic alkali metal sulfonate (D), or may contain two or more types. In the case where two or more types are contained, it is preferable that the total amount be within the range.

The resin composition in the second embodiment may or may not contain an alkali metal salt other than aromatic alkali metal sulfonate (D). As the alkali metal salt other than aromatic alkali metal sulfonate (D), paragraphs 0069 to 0078 of Japanese Patent Laid-Open No. 2015-117298 may be referred to, and the content thereof is incorporated into the present specification.

The resin composition in the second embodiment contains preferably substantially no alkali metal salt other than aromatic alkali metal sulfonate (D). "Containing substantially no" means that the content of alkali metal salts other than aromatic alkali metal sulfonate (D) is 10 mass% or less, preferably 5 mass% or less, more preferably 3 mass% or less, and still more preferably 1 mass% or less, relative to the content of aromatic alkali metal sulfonate (D).

The resin composition in the second embodiment has a mass ratio of Acid-modified polyolefin wax (C-2)/Aromatic alkali metal sulfonate (D), i.e. (C-2)/(D), of preferably 0.15 or more, which may be 0.5 or more, 0.7 or more, or 0.9 or more. With the mass ratio controlled to the lower limit or more, the impact resistance properties, particularly impact properties after detention at high temperature, tend to be improved. Further, the mass ratio of Acid-modified polyolefin wax (C-2)/Aromatic alkali metal sulfonate (D), i.e. (C-2)/(D), is preferably 10.0 or less, more preferably 8.0 or less, still more preferably 5.0 or less, further preferably 3.0 or less, furthermore preferably 2.0 or less, even furthermore preferably 1.5 or

less, and may be 0.9 or less. With the mass ratio controlled to the upper limit or less, the dispersibility of titanium oxide tends to be improved.

<Filler (E)>

The resin composition in the second embodiment may or may not contain a filler. The resin composition in the second embodiment has a content of at least one filler selected from a fibrous glass filler, a fibrous carbon filler, and a plate-shaped glass filler of preferably less than 1 part by mass relative to 100 parts by mass of polycarbonate resin (A). Further, in the resin composition in the second embodiment, the content of filler is preferably less than 1 part by mass relative to 100 parts by mass of polycarbonate resin (A).

The filler may be referred to paragraphs 0052 to 0066 in Japanese Patent Laid-Open No. 2006-249286, and the content thereof is incorporated in the present specification.

<Other components>

The resin composition in the second embodiment may further contain components other than those described above. Examples of the other components include reinforcing materials (excluding filler (E)), mold release agents, colorants other than titanium oxide (e.g. carbon black), stabilizers (thermal stabilizers, antioxidants, etc.), flame retardants other than alkali metal salts, flame retardant aids, anti-dripping agents, ultraviolet absorbers, fluorescent whitening agents, impact modifiers, epoxy compounds, antifogging agents, fluidity modifiers, plasticizers, dispersants, antibacterial agents, and antiviral agents.

Details of these components may be referred to paragraphs 0107 to 0115 in Japanese Patent Laid-Open No. 2014-136710, paragraphs 0106 to 0128 in Japanese Patent Laid-Open No. 2015-117298, and paragraphs 0055 to 0061 in Japanese Patent Laid-Open No. 2018-095706. The contents thereof may be incorporated in the present specification.

In the case where the other components are contained, the content thereof is, for example, 0.001 mass% or more, and for example, 5.0 mass% or less, preferably 3.0 mass% or less, more preferably 1.0 mass% or less, based on the mass of the resin composition.

[Physical properties of resin composition]

From the resin compositions in the present embodiments (the resin composition in the first embodiment and the resin composition in the second embodiment), a molded product with high shielding properties can be provided. In particular, in the case where the resin composition in the present embodiment is molded to a thickness of 1.0 mm, the total light transmittance is preferably 0.04% or less, more preferably less than 0.02%, and still more preferably 0.015% or less. Although the lower limit of the total light transmittance may be 0%, the required performance is sufficiently satisfied even with a lower limit of 0.001% or more.

The total light transmittance is measured in accordance with the description in Examples below.

Also, from the resin composition in the present embodiment, a molded product excellent in impact resistance can be provided. In particular, a 3-mm thick test piece molded from the resin composition at a cylinder temperature of 280°C and a cycle time of 1 minute has a Charpy notched impact strength measured based on ISO 179-1 of preferably 40 $kJ/m^2$ or more, more preferably 42 $kJ/m^2$ or more, still more preferably 44 $kJ/m^2$ or more, further preferably 46 $kJ/m^2$ or more, and furthermore preferably 47 $kJ/m^2$ or more. The upper limit of the Charpy notched impact strength is not particularly prescribed, being practically 70 $kJ/m^2$ or less.

The resin composition of the present embodiment can achieve high impact resistance even when detained in a cylinder during molding. Specifically, a 3-mm thick test piece molded from the resin composition in the present embodiment at a cylinder setting temperature of 310°C and a detention time of 7 minutes in a cylinder has a Charpy notched impact strength measured based on ISO 179-1 of preferably 30 $kJ/m^2$ or more, more preferably 32 $kJ/m^2$ or more, still more preferably 34 $kJ/m^2$ or more, further preferably 39 $kJ/m^2$ or more, and furthermore preferably 40 $kJ/m^2$ or more. The upper limit of the Charpy notched impact strength is not particularly prescribed, being practically 60 $kJ/m^2$ or less.

The resin composition in the present embodiment can maintain high impact resistance even when detained in a cylinder during molding.

Specifically, a test piece with a thickness of 3 mm molded from the resin composition in the first embodiment at a cylinder setting temperature of 310°C and a detention time in a cylinder of 7 minutes has a retention rate of preferably 72% or more, more preferably 73% or more, still more preferably 75% or more, further preferably 80% or more, furthermore preferably 83% or more, even furthermore preferably 85% or more, and particularly further preferably 90% or more, of the Charpy notched impact strength measured based on ISO179-1 in comparison with the Charpy notched impact strength of one molded from the resin composition in the first embodiment at a cylinder setting temperature of 280°C and a cycle time of 1 minute measured by the same method. Although the upper limit of the retention rate of impact strength is not

particularly prescribed, 99% or less is practical.

Also, a test piece with a thickness of 3 mm molded from the resin composition in the second embodiment at a cylinder setting temperature of 310°C and a detention time in a cylinder of 7 minutes has a retention rate of preferably 80% or more, more preferably 82% or more, still more preferably 84% or more, furthermore preferably 86% or more, and even furthermore preferably 88% or more, of the Charpy notched impact strength measured based on ISO179-1 in comparison with the Charpy notched impact strength of one molded from the resin composition in the second embodiment at a cylinder setting temperature of 280°C and a cycle time of 1 minute measured by the same method. Although the upper limit of the retention rate of impact strength is not particularly prescribed, 99% or less is practical.

The Charpy notched impact strength is measured according to the description in Examples below.

The resin composition in the present embodiment (particularly the resin composition in the second embodiment), allows aggregation of titanium oxide particles (B) in a molded product to be effectively suppressed.

Specifically, in observation of a molded product formed from the resin composition in the present embodiment at a cylinder setting temperature of 280°C and a cycle time of 1 minute with a scanning electron microscope, the equivalent circle diameter calculated from the area of the region of scattered particle (B) mainly composed of titanium oxide using formula (1) is preferably 0.165 μm or less. Here, π is circumference ratio. Such a small equivalent circle diameter is achieved by controlling the amount of titanium oxide particles (B) blended, blending potassium diphenyl sulfone sulfonate, and controlling the amount of potassium diphenyl sulfone sulfonate blended or the like.

$$\text{Equivalent circle diameter} = 2\sqrt{\frac{\text{Area}}{\pi}} \qquad (1)$$

The smaller the equivalent circle diameter in the present embodiment, the less aggregation of titanium oxide particles (B) in a molded product. Further, the surface appearance of a molded product is improved due to suppression of aggregation of titanium oxide particles (B).

The equivalent circle diameter is preferably 0.164 μm or less, more preferably 0.163 μm or less, still more preferably 0.162 μm or less, and furthermore preferably 0.160 μm or less. Also, the lower limit of the equivalent circle diameter is not specified, and 0.050 μm or more is practical.

The equivalent circle diameter in the present embodiment is measured as described in Examples below.

[Production of resin composition]

There are no restrictions on the production method of the resin composition in the present embodiment, and a wide variety of known production methods of resin compositions may be employed. Examples of the method include a method including the steps of premixing polycarbonate resin (A), titanium oxide particle (B), polyolefin wax (C-1, C-2), aromatic alkali metal sulfonate (D), and other components blended on an as needed basis with any of various mixers such as a tumbler or Henschel mixer, and then melt-kneading the mixture with a mixer such as Banbury mixer, roll, Brabender, single-screw kneading extruder, twin-screw kneading extruder, or kneader. Here, the melt-kneading temperature is not particularly limited, being usually in the range of 240 to 320°C.

In the present embodiment, a form of the resin composition is a pellet.

The resin composition or pellets in the present embodiment are molded into various molded products. That is, the molded product in the present embodiment is a molded product formed from the resin composition or pellets in the present embodiment. The molding method for the molded product is not specifically prescribed, and examples thereof include injection molding, ultrahigh-speed injection molding, injection compression molding, two-color molding, blow molding such as gas-assisted molding, molding with use of a heat-insulating mold, molding with use of a rapid heating mold, foam molding (including supercritical fluid), insert molding, IMC (in-mold coating) molding, extrusion molding, sheet molding, thermoforming, rotational molding, lamination molding, press molding, and blow molding, among which injection molding is preferred.

Also, the shape of a molded product in the present embodiment is not particularly limited and may be appropriately selected depending on the use and purpose of the molded product. Examples thereof include various shapes such as a plate-like shape, plate shape, rod shape, sheet shape, film shape, cylindrical shape, annular shape, circular shape, elliptical shape, polygonal shape, odd shape, hollow shape, frame shape, box shape, panel shaped, and special shape.

It is preferable that the molded products in the present embodiment be used as parts for structural members, parts for mobile electronic devices, parts for vehicles and medical equipment, electronic parts including other electric circuits, containers for foods and medicines, and composite materials to form these.

In particular, the molded product in the present embodiment is preferably used as in-vehicle components, specifically a headlamp, a ride guide base, in particular.

Example

The present invention is described in more detail with reference to Examples below. The materials, amounts used, proportions, processing details, procedures, etc. shown in the following Examples may be changed appropriately without departing from the subject matter of the present invention. Accordingly, the scope of the present invention is not limited to the specific examples shown below.

In the case where measuring instrument etc. used in Examples are unavailable due to discontinuation or the like, measurement may be performed using another instrument having equivalent performance.

1. Raw materials

Raw materials shown in the following table was used.

[Table 1]

| Abbreviation | | Detail |
|---|---|---|
| PC resin (A) | (A1) | S-3000F, manufactured by Mitsubishi Engineering-Plastics Corporation |
| | (A2) | H-4000F, manufactured by Mitsubishi Engineering-Plastics Corporation |
| | (A3) | Recycled aromatic pPolycarbonate resin collected from market, PC2010A NC, manufactured by Ausell, Mv: 22000 |
| Titanium oxide particle (B) | | Trade name: PFC312, manufactured by Ishihara Sangyo Kaisha, Ltd. |
| Polyolefin wax (C) | (C1) | Trade name: Hi-WAX410P, manufactured by Mitsui Chemicals, Inc., generally polymerized low-density polyethylene, molecular weight (Mv): 4000, acid value (mgKOH/g): 0 |
| | (C2) | Trade name: DIACARNA 30M, manufactured by Mitsubishi Chemical Corporation, $\alpha$-olefin/maleic anhydride copolymer, molecular weight (Mv): 13000, acid value (mgKOH/g): 95 to 110 |
| | (C3) | Trade name: Hi-WAX1105A, manufactured by Mitsui Chemicals, Inc., maleic anhydride-modified ethylene-propylene copolymer, molecular weight (Mv): 1500, acid value (mgKOH/g): 60 |
| | (C4) | Trade name: Hi-WAX405MP, manufactured by Mitsui Chemicals, Inc., maleic anhydride-modified ethylene-propylene copolymer, molecular weight (Mv): 4000, acid value (mgKOH/g): 1 |
| Metal salt (D) | (D1) | Trade name: CHEMGUARD-NATS, manufactured by Sun Chemical Company Ltd., sodium para-toluene sulfonate (fluorination ratio: 0%) |
| | (D2) | Trade name: IHT-FR21 C4-K, manufactured by Insight High Technology Co., Ltd., potassium perfluoro butane sulfonate (fluorination ratio: 100%) |
| | (D3) | Trade name: KSS-FR, manufactured by Arichem Ltd., diphenylsulfone-3-potassium sulfonate (fluorination ratio: 0%) |
| Filler (E) | | PEF-301S milled fiber, manufactured by Nitto Boseki Co., Ltd., fibrous glass |

The titanium oxide particle contains 90.0 to 98.0 mass% of $TiO_2$, 0.5 to 3.5 mass% of $Al_2O_3$, and 0 to 6.0 mass% of $SiO_2$.

Metal salts (D1) and (D3) are aromatic alkali metal sulfonates containing no fluorine atom (fluorination ratio: 0%), and metal salt (D2) is a sulfonate containing fluorine atoms (fluorination ratio: 100%).

Here, to all samples examined in Examples and Comparative Examples, 0.1 mass% of S-100A manufactured by Riken Vitamin Co., Ltd. and 0.3 mass% of VPG861 manufactured by Emery Oleochemicals were added as mold release agent, and 0.03 mass% of Adekastab 2112 manufactured by ADEKA Corporation was added as stabilizer.

In Tables 2 to 5, as "polycarbonate resin (A1)/(A2)", a mixture of polycarbonate resin (A1) and polycarbonate resin (A2) with a melt volume rate (MVR, 300°C, 1.2 kgf) controlled to 17.5 $cm^3$/10 minutes was used. The mass ratio

between the polycarbonate resin (A1) and polycarbonate resin (A2) in "polycarbonate resin (A1)/(A2)" is about 77:13.

<Measurement of acid value of polyolefin wax>

The acid value of polyolefin wax was measured in accordance with JIS K0070.

<Measurement of viscosity average molecular weight (Mv) of polyolefin wax>

In accordance with ASTM D445, the intrinsic viscosity (η) was determined, and Mv (viscosity average molecular weight) was calculated from the viscosity formula [η].

2. Examples 1-1 to 1-13, and Comparative Examples 1-1 to 1-9

<Preparation of resin pellet>

Each of the components listed in Table 1 was blended in a proportion shown in Tables 2 to 6 (each component content: parts by mass), and mixed uniformly with a tumbler mixer to prepare a mixture. The mixture was supplied to a twin-screw extruder "TEX25αIII" manufactured by The Japan Steel Works, Ltd., kneaded under conditions at a screw rotation of 700 rpm, discharge rate of 20 kg/hour, and barrel temperature of 260°C, and extruded into a strand form from a nozzle tip. The extruded product was rapidly cooled in a water tank, and cut into pellets with a pelletizer, so that pellets of the resin composition were obtained.

<Mold deposit>

The resulting pellets were dried at 120°C for 5 hours, and then molded with an injection molding machine (manufactured by Sumitomo Heavy Industries, Ltd., SE7M-C12) under conditions at a cylinder temperature of 280°C, a mold temperature of 40°C, a screw rotation speed of 300 rpm, and an injection speed of 4 mm/s. In the 200-shot molding process, mold contamination state was evaluated based on the following criteria by five experts, and determination was made by majority vote.

A: The degree of mold contamination was the same as in the cases of the products without addition of metal salts and wax.

B: Other than the above A (for example, the degree of mold contamination was worse than the cases of the products without addition of metal salts and wax).

<Total light transmittance (thickness: 1.0 mm)>

The resulting pellets were dried at 120°C for 5 hours, and then molded into a test piece having a thickness of 1.0 mm with an injection molding machine ("EC75", manufactured by Shibaura Machine Co., Ltd.) under conditions at a cylinder temperature of 280°C, a mold temperature of 80°C, a screw rotation speed of 100 rpm, and an injection speed of 30 mm/s.

The total light transmittance (unit: %) of the resulting test piece was measured with a haze meter.

As the haze meter, an NDH-2000 type haze meter manufactured by Nippon Denshoku Industries Co., Ltd. was used.

<Charpy impact strength (molding temperature: 280°C, cycle: 1 minute)>

The resulting pellets were dried at 120°C for 5 hours, and then injection molded into an ISO multipurpose test piece (3.0 mm thick) with an injection molding machine ("EC75", manufactured by Shibaura Machine Co., Ltd.) under conditions at a cylinder temperature of 280°C, a mold temperature of 80°C, a screw rotation speed of 80 rpm, and an injection speed of 30 mm/s (cycle time: 1 minute).

The resulting ISO multipurpose test piece (3.0 mm thick) was subjected to measurement of Charpy notched impact strength (unit: $kJ/m^2$) at a temperature of 23°C based on ISO standard 179-1.

<Charpy impact strength (molding temperature: 310°C, detention time: 7 minute)>

The resulting pellets were dried at 120°C for 5 hours, and then injection molded into an ISO multipurpose test piece (3.0 mm thick) through weighing with an injection molding machine ("EC75", manufactured by Shibaura Machine

Co., Ltd.) at a cylinder temperature of 310°C, a mold temperature of 80°C, a screw rotation speed of 80 rpm, under conditions at an injection speed of 30 mm/s after detention in a cylinder for 7 minutes.

The resulting ISO multipurpose test piece (3.0 mm thick) was subjected to measurement of Charpy notched impact strength (unit: kJ/$m^2$) at a temperature of 23°C based on ISO standard 179-1.

<Impact strength retention rate (%)>

From the values of Charpy impact strength (molding temperature: 310°C, detention time: 7 minutes) and Charpy impact strength (molding temperature: 280°C, cycle time: 1 minute), the retention rate of impact strength [Charpy impact strength (molding temperature: 310°C, detention time: 7 minutes)/Charpy impact strength (molding temperature: 280°C, cycle time: 1 minute)]×100 (unit: %) was calculated.

[Table 2]

| | | | Example 1-1 | Example 1-2 | Example 1-3 | Example 1-4 | Example 1-5 |
|---|---|---|---|---|---|---|---|
| Polycarbonate resin (A1)/(A2) | | Part by mass | 100 | 100 | 100 | 100 | 100 |
| Polycarbonate resin (A3) | | Part by mass | | | | | |
| Titanium oxide particle (B) | | Part by mass | 10.0 | 10.0 | 10.0 | 10.0 | 10.0 |
| Polyolefin wax (C1) | | Part by mass | 0.3 | 0.5 | 0.3 | 0.5 | 0.3 |
| Metal salt (D) | (D1) NATS | Part by mass | | | | | 0.3 |
| | (D2) C4 (comparison) | Part by mass | | | | | |
| | (D3) KSS | Part by mass | 0.3 | 0.3 | 0.5 | 0.5 | |
| (C1)/(D) | | | 1.0 | 1.7 | 0.6 | 1.0 | 1.0 |
| Mold deposit | | - | A | A | A | A | A |
| Total light transmittance (at 1.0 mm) | | % | 0.01 | 0.01 | 0.01 | 0.01 | 0.01 |
| Charpy impact strength | Molding temperature: 280°C, cycle time: 1 minute | kJ/$m^2$ | 48 | 49 | 51 | 46 | 49 |
| | Molding temperature: 310°C, detention time: 7 minutes | kJ/$m^2$ | 45 | 43 | 47 | 45 | 47 |
| Retention rate of Charpy impact strength | | % | 93.8 | 87.8 | 92.2 | 97.8 | 95.9 |

[Table 3]

| | | Example 1-6 | Example 1-7 | Example 1-8 | Example 1-9 |
|---|---|---|---|---|---|
| Polycarbonate resin (A1)/(A2) | Part by mass | 100 | 100 | 100 | 100 |
| Polycarbonate resin (A3) | Part by mass | | | | |
| Titanium oxide particle (B) | Part by mass | 10.0 | 10.0 | 10.0 | 10.0 |

(continued)

| | | | Example 1-6 | Example 1-7 | Example 1-8 | Example 1-9 |
|---|---|---|---|---|---|---|
| Polyolefin wax (C1) | | Part by mass | 0.5 | 0.3 | 0.5 | 0.3 |
| Metal salt (D) | (D1) NATS | Part by mass | 0.3 | 0.5 | 0.5 | 002 |
| | (D2) C4 (comparison) | Part by mass | | | | |
| | (D3) KSS | Part by mass | | | | |
| (C1)/(D) | | | 1.7 | 0.6 | 1.0 | 15 |
| Mold deposit | | - | A | A | A | A |
| Total light transmittance (at 1.0 mm) | | % | 0.01 | 0.01 | 0.01 | 0.01 |
| Charpy impact strength | Molding temperature: 280°C, cycle time: 1 minute | $kJ/m^2$ | 47 | 51 | 47 | 51 |
| | Molding temperature: 310°C, detention time: 7 minutes | $kJ/m^2$ | 42 | 46 | 46 | 41 |
| Retention rate of Charpy impact strength | | % | 89.4 | 90.2 | 97.9 | 80.5 |

[Table 4]

| | | | Example 1-10 | Example 1-11 | Example 1-12 | Example 1-13 |
|---|---|---|---|---|---|---|
| Polycarbonate resin (A1)/(A2) | | Part by mass | 100 | 70 | 50 | 30 |
| Polycarbonate resin (A3) | | Part by mass | | 30 | 50 | 70 |
| Titanium oxide particle (B) | | Part by mass | 10.0 | 100 | 100 | 10.0 |
| Polyolefin wax (C1) | | Part by mass | 0.3 | 0.3 | 0.3 | 0.3 |
| Metal salt (D) | (D1) NATS | Part by mass | | 0.5 | 0.5 | 0.5 |
| | (D2) C4 (comparison) | Part by mass | | | | |
| | (D3) KSS | Part by mass | 0.02 | | | |
| (C1)/(D) | | | 15 | 0.6 | 0.6 | 0.6 |
| Mold deposit | | - | A | A | A | A |
| Total light transmittance (at 1.0 mm) | | % | 0.01 | 0.01 | 0.01 | 0.01 |
| Charpy impact strength | Molding temperature: 280°C, cycle time: 1 minute | $kJ/m^2$ | 53 | 52 | 50 | 45 |
| | Molding temperature: 310°C, detention time: 7 minutes | $kJ/m^2$ | 39 | 42 | 42 | 39 |
| Retention rate of Charpy impact strength | | % | 74.4 | 80.8 | 84.0 | 86.7 |

[Table 5]

| | | | Comparative Example 1-1 | Comparative Example 1-2 | Comparative Example 1-3 | Comparative Example 1-4 | Comparative Example 1-5 |
|---|---|---|---|---|---|---|---|
| Polycarbonate resin (A1)/(A2) | | Part by mass | 100 | 100 | 100 | 100 | 100 |
| Polycarbonate resin (A3) | | Part by mass | | | | | |
| Titanium oxide particle (B) | | Part by mass | 10.0 | 10.0 | 10.0 | 10.0 | 10.0 |
| Polyolefin wax (C1) | | Part by mass | | | | | 0.3 |
| Metal salt (D) | (D1) NATS | Part by mass | 0.05 | 0.1 | 0.3 | 1.0 | |
| | (D2) C4 (comparison) | Part by mass | | | | | 0.5 |
| | (D3) KSS | Part by mass | | | | | |
| (C1)/(D) | | | - | - | - | - | 0.6 |
| Mold deposit | | - | A | A | A | A | A |
| Total light transmittance (at 1.0 mm) | | % | 0.01 | 0.01 | 0.01 | 0.01 | 0.01 |
| Charpy impact strength | Molding temperature: 280°C, cycle time: 1 minute | $kJ/m^2$ | 48 | 48 | 51 | 49 | 51 |
| | Molding temperature: 310°C, detention time: 7 minutes | $kJ/m^2$ | 12 | 13 | 15 | 16 | 27 |
| Retention rate of Charpy impact strength | | % | 25.0 | 27.1 | 29.4 | 32.7 | 53.3 |

[Table 6]

| | | Comparative Example 1-6 | Comparative Example 1-7 | Comparative Example 1-8 | Comparative Example 1-9 |
|---|---|---|---|---|---|
| Polycarbonate resin (A1)/(A2) | Part by mass | 100 | 100 | 100 | 100 |
| Polycarbonate resin (A3) | Part by mass | | | | |

(continued)

| | | | Comparative Example 1-6 | Comparative Example 1-7 | Comparative Example 1-8 | Comparative Example 1-9 |
|---|---|---|---|---|---|---|
| Titanium oxide particle (B) | | Part by mass | 10.0 | 10.0 | 10.0 | 10.0 |
| Polyolefin wax (C1) | | Part by mass | 0.3 | 1.0 | | |
| Metal salt (D) | (D1) NATS | Part by mass | | | | |
| | (D2) C4 (comparison) | Part by mass | | | | |
| | (D3) KSS | Part by mass | | | 0.05 | 0.1 |
| (C1)/(D) | | | - | - | - | - |
| Mold deposit | | - | A | B | A | A |
| Total light transmittance (at 1.0 mm) | | % | 0.01 | 0.01 | 0.01 | 0.01 |
| Charpy impact strength | Molding temperature: 280°C, cycle time: 1 minute | $kJ/m^2$ | 50 | 49 | 51 | 52 |
| | Molding temperature: 310°C, detention time: 7 minutes | $kJ/m^2$ | 35 | 30 | 15 | 26 |
| Retention rate of Charpy impact strength | | % | 70.0 | 61.2 | 29.4 | 50.0 |

In Tables 2 to 6 described above, "(C-1)/(D)" indicates the mass ratio of Acid-unmodified or slightly acid-modified polyolefin wax (C-1)/Aromatic alkali metal sulfonate (D).

As shown in the results, the molded product obtained from the resin composition in the first embodiment achieved desired light-shielding properties and was excellent in impact resistance, particularly the retention rate of impact resistance when detained.

3. Examples 2-1 to 2-11, and Comparative Examples 2-1 to 2-10

Pellets of resin composition were obtained in the same manner as in Example 1-1. In the same manner as in Example 1-1, the mold deposit, total light transmittance, Charpy impact strength (molding temperature: 280°C, cycle time: 1 minute/ molding temperature: 310°C, detention time: 7 minutes), and retention rate of impact strength (%) were measured. Further, the average equivalent circle diameter was measured for Examples 2-1 to 2-11, Comparative Examples 2-1 to 2-10, and Comparative Example 1-5.

<Average equivalent circle diameter>

The resulting pellets were dried at 120°C for 5 hours, and then injection molded into an ISO multipurpose test piece (3.0 mm thick) with an injection molding machine ("EC75", manufactured by Shibaura Machine Co., Ltd.) under conditions at a cylinder temperature of 280°C, a mold temperature of 80°C, a screw rotation speed of 80 rpm, and an injection speed of 30 mm/s. The resulting test piece was ultrasonically cleaned with methanol for 5 minutes, and the surface of the central part of the dumbbell was observed with a scanning electron microscope (SEM) S-4800 (manufactured by Hitachi High-Tech Corporation) at an accelerating voltage of 3.0 kV and a current of 10 μA with a magnification

of 3000. The resulting image was passed through a Gaussian 3×3 filter to perform automatic binarization processing, and those displayed as an area of 0.001 μm$^2$ or less were deleted as noise. From the area of each titanium oxide scattered on the resulting image data, the equivalent circle diameter (diameter) was calculated using the formula below, and the average value thereof was defined as equivalent circle diameter (unit: μm) of the sample. It can be said that the appearance is good in the case where the equivalent circle diameter is 0.165 μm. or less, and the appearance is better in the case where the equivalent circle diameter is 0.160 μm or less.

$$\text{Equivalent circle diameter} \fallingdotseq 2\sqrt{\frac{\text{Area}}{\pi}} \qquad (1)$$

[Table 7]

| | | | Example 2-1 | Example 2-2 | Example 2-3 | Example 2-4 |
|---|---|---|---|---|---|---|
| Polycarbonate resin (A1)/(A2) | | Part by mass | 100 | 100 | 100 | 100 |
| Polycarbonate resin (A3) | | Part by mass | | | | |
| Titanium oxide (B) | | Part by mass | 10.0 | 10.0 | 10.0 | 10.0 |
| Polyolefin wax (C) | (C1) | Part by mass | | | | |
| | (C2) | Part by mass | | | 0.05 | 0.3 |
| | (C3) | Part by mass | 0.05 | 0.3 | | |
| | (C4) | Part by mass | | | | |
| Metal salt (D) | (D1) | Part by mass | | | | |
| | (D2) | Part by mass | | | | |
| | (D3) | Part by mass | 0.3 | 0.3 | 0.3 | 0.3 |
| Filler (E) glass fiber | | Part by mass | | | | |
| (C)/(D) | | | 0.17 | 1.00 | 0.17 | 1.00 |
| Mold deposit | | - | A | A | B | B |
| Total light transmittance (at 1.0 mm) | | % | 0.01 | 0.01 | 0.01 | 0.01 |
| Charpy impact strength | Molding temperature: 280°C, cycle time: 1 minute | kJ/m$^2$ | 49 | 53 | 54 | 55 |
| | Molding temperature: 310°C, detention time: 7 minutes | kJ/m$^2$ | 41 | 51 | 48 | 49 |
| Retention rate of Charpy impact strength | | % | 83.7 | 96.2 | 88.9 | 89.1 |
| Average equivalent circle diameter | | μm | 0.160 | 0.163 | 0.156 | 0.157 |

[Table 8]

| | | | Example 2-5 | Example 2-6 | Example 2-7 | Example 2-8 |
|---|---|---|---|---|---|---|
| Polycarbonate resin (A1)/(A2) | | Part by mass | 100 | 100 | 70 | 50 |
| Polycarbonate resin (A3) | | Part by mass | | | 30 | 50 |
| Titanium oxide (B) | | Part by mass | 10.0 | 10.0 | 10.0 | 10.0 |
| Polyolefin wax (C) | (C1) | Part by mass | | | | |
| | (C2) | Part by mass | | | | |
| | (C3) | Part by mass | 0.3 | 0.05 | 0.3 | 0.3 |
| | (C4) | Part by mass | | | | |
| Metal salt (D) | (D1) | Part by mass | 0.25 | 0.25 | | |
| | (D2) | Part by mass | | | | |
| | (D3) | Part by mass | | | 0.3 | 0.3 |
| Filler (E) glass fiber | | Part by mass | | | | |
| (C)/(D) | | | 1.20 | 0.20 | 1.00 | 1.00 |
| Mold deposit | | - | A | A | A | A |
| Total light transmittance (at 1.0 mm) | | % | 0.01 | 0.01 | 0.01 | 0.01 |
| Charpy impact strength | Molding temperature: 280°C, cycle time: 1 minute | $kJ/m^2$ | 54 | 52 | 52 | 52 |
| | Molding temperature: 310°C, detention time: 7 minutes | $kJ/m^2$ | 53 | 42 | 50 | 49 |
| Retention rate of Charpy impact strength | | % | 98.1 | 80.8 | 96.2 | 94.2 |
| Average equivalent circle diameter | | μm | 0.162 | 0.157 | 0.161 | 0.164 |

[Table 9]

| | | Example 2-9 | Example 2-10 | Example 2-11 |
|---|---|---|---|---|
| Polycarbonate resin (A1)/(A2) | Part by mass | 30 | 100 | 100 |
| Polycarbonate resin (A3) | Part by mass | 70 | | |
| Titanium oxide (B) | Part by mass | 10.0 | 10.0 | 10.0 |

(continued)

| | | | Example 2-9 | Example 2-10 | Example 2-11 |
|---|---|---|---|---|---|
| Polyolefin wax (C) | (C1) | Part by mass | | | |
| | (C2) | Part by mass | | | |
| | (C3) | Part by mass | 0.3 | | 0.3 |
| | (C4) | Part by mass | | 0.5 | |
| Metal salt (D) | (D1) | Part by mass | | | |
| | (D2) | Part by mass | | | |
| | (D3) | Part by mass | 0.3 | | 0.3 |
| Filler (E) glass fiber | | Part by mass | | | 2.0 |
| (C)/(D) | | | 1.00 | - | - |
| Mold deposit | | - | A | A | A |
| Total light transmittance (at 1.0 mm) | | % | 0.01 | 0.01 | 0.01 |
| Charpy impact strength | Molding temperature: 280°C, cycle time: 1 minute | $kJ/m^2$ | 51 | 50 | 40 |
| | Molding temperature: 310°C, detention time: 7 minutes | $kJ/m^2$ | 45 | 38 | 30 |
| Retention rate of Charpy impact strength | | % | 88.2 | 76.0 | 75.0 |
| Average equivalent circle diameter | | μm | 0.164 | 0.164 | 0.165 |

[Table 10]

| | | Comparative Example 2-1 | Comparative Example 2-2 | Comparative Example 2-3 | Comparative Example 2-4 |
|---|---|---|---|---|---|
| Polycarbonate resin (A1)/(A2) | Part by mass | 100 | 100 | 100 | 100 |
| Polycarbonate resin (A3) | Part by mass | | | | |
| Titanium oxide (B) | Part by mass | 10.0 | 10.0 | 10.0 | 10.0 |

(continued)

| | | | Comparative Example 2-1 | Comparative Example 2-2 | Comparative Example 2-3 | Comparative Example 2-4 |
|---|---|---|---|---|---|---|
| Polyolefin wax (C) | (C1) | Part by mass | | | | |
| | (C2) | Part by mass | | | | |
| | (C3) | Part by mass | 0.01 | | | |
| | (C4) | Part by mass | | | | |
| Metal salt (D) | (D1) | Part by mass | 0.1 | 0.05 | 0.1 | 0.3 |
| | (D2) | Part by mass | | | | |
| | (D3) | Part by mass | | | | |
| Filler (E) glass fiber | | Part by mass | | | | |
| (C)/(D) | | | 0.10 | - | - | - |
| Mold deposit | | - | A | A | A | A |
| Total light transmittance (at 1.0 mm) | | % | 0.01 | 0.01 | 0.01 | 0.01 |
| Charpy impact strength | Molding temperature: 280°C, cycle time: 1 minute | $kJ/m^2$ | 54 | 48 | 48 | 51 |
| | Molding temperature: 310°C, detention time: 7 minutes | $kJ/m^2$ | 21 | 12 | 13 | 15 |
| Retention rate of Charpy impact strength | | % | 38.9 | 25.0 | 27.1 | 29.4 |
| Average equivalent circle diameter | | μm | 0.155 | 0.155 | 0.155 | 0.153 |

[Table 11]

| | | Comparative Example 2-5 | Comparative Example 1-5 | Comparative Example 2-6 | Comparative Example 2-7 |
|---|---|---|---|---|---|
| Polycarbonate resin (A1)/(A2) | Part by mass | 100 | 100 | 100 | 100 |
| Polycarbonate resin (A3) | Part by mass | | | | |

(continued)

| | | | Comparative Example 2-5 | Comparative Example 1-5 | Comparative Example 2-6 | Comparative Example 2-7 |
|---|---|---|---|---|---|---|
| Titanium oxide (B) | | Part by mass | 10.0 | 10.0 | 10.0 | 100 |
| Polyolefin wax (C) | (C1) | Part by mass | | 0.3 | | |
| | (C2) | Part by mass | | | | |
| | (C3) | Part by mass | | | 0.3 | 0.05 |
| | (C4) | Part by mass | | | | |
| Metal salt (D) | (D1) | Part by mass | 1.0 | | | |
| | (D2) | Part by mass | | 0.5 | | |
| | (D3) | Part by mass | | | 0.02 | |
| Filler (E) glass fiber | | Part by mass | | | | |
| (C)/(D) | | | - | 0.6 | 15 | - |
| Mold deposit | | - | A | A | A | A |
| Total light transmittance (at 1.0 mm) | | % | 0.01 | 0.01 | 0.01 | 0.01 |
| Charpy impact strength | Molding temperature: 280°C, cycle time: 1 minute | $kJ/m^2$ | 49 | 51 | 55 | 51 |
| | Molding temperature: 310°C, detention time: 7 minutes | $kJ/m^2$ | 16 | 27 | 50 | 24 |
| Retention rate of Charpy impact strength | | % | 32.7 | 53.3 | 90.9 | 47.1 |
| Average equivalent circle diameter | | μm | 0.150 | 0.156 | 0.170 | 0.161 |

[Table 12]

| | | Comparative Example 2-8 | Comparative Example 2-9 | Comparative Example 2-10 |
|---|---|---|---|---|
| Polycarbonate resin (A1)/(A2) | Part by mass | 100 | 100 | 100 |

(continued)

| | | | Comparative Example 2-8 | Comparative Example 2-9 | Comparative Example 2-10 |
|---|---|---|---|---|---|
| Polycarbonate resin (A3) | | Part by mass | | | |
| Titanium oxide (B) | | Part by mass | 10.0 | 10.0 | 10.0 |
| Polyolefin wax (C) | (C1) | Part by mass | | | |
| | (C2) | Part by mass | | | |
| | (C3) | Part by mass | 0.3 | 0.5 | 1.0 |
| | (C4) | Part by mass | | | |
| Metal salt (D) | (D1) | Part by mass | | | |
| | (D2) | Part by mass | | | |
| | (D3) | Part by mass | | | |
| Filler (E) glass fiber | | Part by mass | | | |
| (C)/(D) | | | - | - | - |
| Mold deposit | | - | A | A | C |
| Total light transmittance (at 1.0 mm) | | % | 0.01 | 0.01 | 0.01 |
| Charpy impact strength | Molding temperature: 280°C, cycle time: 1 minute | $kJ/m^2$ | 53 | 54 | 52 |
| | Molding temperature: 310°C, detention time: 7 minutes | $kJ/m^2$ | 50 | 49 | 50 |
| Retention rate of Charpy impact strength | | % | 94.3 | 90.7 | 96.2 |
| Average equivalent circle diameter | | μm | 0.169 | 0.169 | 0.171 |

In Tables 7 to 12 described above, "(C)/(D)" indicates the mass ratio of Acid-modified polyolefin wax (C-2)/Aromatic alkali metal sulfonate (D).

As shown in the above results, the molded product obtained from the resin composition in the second embodiment achieved desired light-shielding properties, and had an excellent appearance of a molded product, with excellent impact resistance of a molded product, particularly retention rate of impact resistance when detained.

## Claims

**1.** A resin composition comprising 5.0 to 20.0 parts by mass of particle (B) mainly composed of titanium oxide relative to 100 parts by mass of polycarbonate resin (A), polyolefin wax (C) and aromatic metal sulfonate (D); wherein

in the case where the polyolefin wax (C) is polyolefin wax (C-1) having an acid value of less than 0.5 mgKOH/g, the polyolefin wax (C-1) content is 0.001 to 1.5 parts by mass, and the aromatic metal sulfonate (D) content is 0.01 to 1.5 parts by mass; and

in the case where the polyolefin wax (C) is polyolefin wax (C-2) having an acid value of 0.5 to 150 mgKOH/g, the polyolefin wax (C-2) content is 0.001 to 1.5 parts by mass, and the aromatic alkali metal sulfonate (D) content is

0.2 to 1.5 parts by mass.

2. The resin composition according to claim 1, comprising 5.0 to 20.0 parts by mass of particle (B) mainly composed of titanium oxide, 0.001 to 1.5 parts by mass of polyolefin wax (C-1) having an acid value of less than 0.5 mgKOH/g, and 0.01 to 1.5 parts by mass of aromatic alkali metal sulfonate (D), relative to 100 parts by mass of polycarbonate resin (A).

3. The resin composition according to claim 2, having a mass ratio of polyolefin wax (C-1) to aromatic alkali metal sulfonate (D), i.e. (C-1)/(D), of 0.15 to 20.

4. The resin composition according to claim 1, comprising 5.0 to 20.0 parts by mass of particle (B) mainly composed of titanium oxide, 0.001 to 1.5 parts by mass of polyolefin wax (C-2) having an acid value of 0.5 to 150 mgKOH/g, and 0.2 to 1.5 parts by mass of aromatic alkali metal sulfonate (D), relative to 100 parts by mass of polycarbonate resin (A).

5. The resin composition according to claim 4, having a mass ratio of polyolefin wax (C-2) to aromatic alkali metal sulfonate (D), i.e. (C-2)/(D), of 0.15 to 10.0.

6. The resin composition according to claim 4 or 5, wherein in observation of a molded product formed from the resin composition at a cylinder setting temperature of 280°C and a cycle time of 1 minute with a scanning electron microscope, the equivalent circle diameter calculated from the area of the region of scattered particle (B) mainly composed of titanium oxide using formula (1) is 0.165 μm or less.

7. The resin composition according to any one of claims 1 to 6, wherein polyolefin wax (C) has a carboxyl group and/or an acid anhydride group thereof.

8. The resin composition according to any one of claims 1 to 7, wherein aromatic alkali metal sulfonate (D) has a fluorination ratio of less than 1%.

9. The resin composition according to any one of claims 1 to 8, comprising at least one filler selected from fibrous glass filler, fibrous carbon filler, and plate-shaped glass filler, with a content of less than 1 part by mass relative to 100 parts by mass of the polycarbonate resin.

10. A pellet comprising a resin composition according to any one of claims 1 to 9.

11. A molded product formed from a resin composition according to any one of claims 1 to 9.

12. A molded product formed from the pellet according to claim 10.

**INTERNATIONAL SEARCH REPORT**

International application No. **PCT/JP2023/014622**

**A. CLASSIFICATION OF SUBJECT MATTER**

***C08L 69/00***(2006.01)i; ***C08K 3/22***(2006.01)i; ***C08K 5/42***(2006.01)i; ***C08L 23/00***(2006.01)i; ***C08L 23/26***(2006.01)i
FI: C08L69/00; C08K3/22; C08L23/00; C08K5/42; C08L23/26

According to International Patent Classification (IPC) or to both national classification and IPC

**B. FIELDS SEARCHED**

Minimum documentation searched (classification system followed by classification symbols)

C08L69/00; C08K3/22; C08K5/42; C08L23/00; C08L23/26

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br><br><br>A | JP 2006-348144 A (MITSUBISHI ENGINEERING PLASTICS CORP.) 28 December 2006 (2006-12-28)<br>claims 1-8, paragraphs [0021], [0028], [0037], [0052], examples 1-4, 9 | 1-3, 6-12<br><br><br>4-5 |
| A | JP 9-302209 A (TEIJIN CHEMICALS LTD.) 25 November 1997 (1997-11-25)<br>paragraph [0018] | 7 |
| A | JP 2008-94904 A (TEIJIN CHEMICALS LTD.) 24 April 2008 (2008-04-24)<br>entire text | 1-12 |
| A | CN 106633771 A (SICHUAN DONGFANG INSULATING MATERIAL CO., LTD.) 10 May 2017 (2017-05-10)<br>entire text | 1-12 |
| A | JP 2011-174031 A (IDEMITSU KOSAN CO., LTD.) 08 September 2011 (2011-09-08)<br>entire text | 1-12 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **20 June 2023** | **04 July 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br><br>Telephone No. |

Form PCT/ISA/210 (second sheet) (January 2015)

INTERNATIONAL SEARCH REPORT

International application No.
PCT/JP2023/014622

C. DOCUMENTS CONSIDERED TO BE RELEVANT

| Category* | Citation of document, with indication, where appropriate, of the relevant passages | Relevant to claim No. |
|---|---|---|
| A | WO 2010/101043 A1 (MITSUBISHI ENGINEERING PLASTICS CORP.) 10 September 2010 (2010-09-10)<br>entire text | 1-12 |

Form PCT/ISA/210 (second sheet) (January 2015)

**INTERNATIONAL SEARCH REPORT**
**Information on patent family members**

International application No.
**PCT/JP2023/014622**

| Patent document cited in search report | Publication date (day/month/year) | Patent family member(s) | Publication date (day/month/year) |
|---|---|---|---|
| JP 2006-348144 A | 28 December 2006 | (Family: none) | |
| JP 9-302209 A | 25 November 1997 | (Family: none) | |
| JP 2008-94904 A | 24 April 2008 | (Family: none) | |
| CN 106633771 A | 10 May 2017 | (Family: none) | |
| JP 2011-174031 A | 08 September 2011 | CN 102140237 A | |
| WO 2010/101043 A1 | 10 September 2010 | US 2011/0269882 A1<br>entire text<br>EP 2404969 A1<br>CN 102341456 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019172243 A
- JP 2019123809 A
- JP 2021 A
- JP 084942 A
- JP 2021119211 A
- JP 2015117298 A
- JP 2006249286 A
- JP 2014136710 A
- JP 2018095706 A